# EUROPÄISCHE PATENTANMELDUNG

(11) **EP 2 020 323 A1**
(43) Veröffentlichungstag der Anmeldung: **04.02.2009**
(21) Anmeldenummer: 08010997.8
(22) Anmeldetag: 18.06.2008
(51) Int. Cl.: B60J 7/02

(54) **Fahrzeugdach mit einem Dachmodul**

(30) Priorität: 31.07.2007 DE 102007036366
(71) Anmelder: Webasto AG, 82131 Stockdorf (DE)
(72) Erfinder: Hölzel, Dominik, 82194 Gröbenzell (DE)

(57) **Zusammenfassung**

Die Erfindung betrifft ein Fahrzeugdach mit einem eine Dachöffnung (6) umgebenden Dachrahmen (2) und einem die Dachöffnung (6) abdeckenden Dachmodul (8), das Führungsschienen (14) und ein an den Führungsschienen (14) bewegbar gelagertes Abdeckelement (9) aufweist, wobei erfindungsgemäß vorgesehen ist, dass das Dachmodul (8) zumindest zwei Führungsschienen (14) und ein die Führungsschienen (14) verbindendes Verbindungselement (16, 17) aufweist und dass zumindest die Führungsschienen (14) an der Unterseite eines Flansches (23) des Dachrahmens (7) befestigt sind.

## Beschreibung

Die Erfindung betrifft ein Fahrzeugdach mit einem eine Dachöffnung umgebenden Dachrahmen und einem die Dachöffnung abdeckenden Dachmodul, das Führungsschienen und ein an den Führungsschienen bewegbar gelagertes Abdeckelement aufweist.

Aus der DE 102 18 601 A1 ist ein Fahrzeugdach bekannt geworden, das einen eine Dachöffnung umgebenden fahrzeugfesten Dachrahmen mit Seitenholmen und Querholmen aufweist. Ein die Dachöffnung verschließendes Dachmodul ist mittels eines Trägerrahmens an einem am Dachrahmen gebildeten und einwärts vorstehenden Dachflansch befestigt, wobei ein äußerer Flanschbereich des Trägerrahmens mittels einer Kleberaupe auf der Oberseite des Dachflansches verklebt ist. Eine jeweilige seitliche Führungsschiene eines außengeführten Schiebedaches (ASD) des Dachmoduls ist an dem im Querschnitt U-förmigen Trägerrahmen innenseitig befestigt. Der Trägerrahmen und die sich einwärts anschließende Führungsschiene schränken den Durchsichtsbereich eines eine transparente Abdeckung wie z. B. einen Glasdeckel des Schiebedaches aufweisenden Dachmoduls deutlich ein.

Aus der DE 10 2005 016 458 A1 ist eine Dachkonstruktion für ein Kraftfahrzeug bekannt, die einen eine Dachöffnung umgebenden Dachrahmen aufweist, an dem unterschiedliche Dachmodule festlegbar sind. Der Dachrahmen weist einen zur Dachöffnung gerichteten umlaufenden Flansch auf, an dem eine einwärts vorstehende Flanscherweiterung als Auflageabschnitt gebildet ist, auf deren Oberseite ein randseitiger Trägerrahmen des Dachmoduls durch Verkleben befestigt ist. Zusätzlich kann der Trägerrahmen auch auf der Oberseite des Flansches verklebt sein. Der Trägerrahmen bildet einerseits eine sichtseitige Randfläfestigt ist. Zusätzlich kann der Trägerrahmen auch auf der Oberseite des Flansches verklebt sein. Der Trägerrahmen bildet einerseits eine sichtseitige Randfläche, die die von einem bewegbaren Deckel verschließbare Dachmodulöffnung umgibt, und dient andererseits als Befestigungsgrundlage für eine Führungsschiene, an der der Deckel verschiebbar gelagert ist. Die Führungsschiene ist somit vom Flansch bzw. dem Auflageabschnitt deutlich beabstandet und liegt wesentlich innerhalb der Dachmodulöffnung unter dem Deckel und beschränkt damit den Durchsichtsbereich, wenn der Deckel ein Glasdeckel ist.

Generell sind Fahrzeugrohbauten oder Dachrahmen bekannt, deren Rohbauschweißflansch zum Fügen (Schweißen, Kleben usw.) der Beplankung der Dachhaut bzw. für das Fügen eines Topload-ASDs dienen. Der vordere Dachrahmen (Windlauf) und der hintere Dachrahmen sind so gestaltet, dass sie die Beplankung des Daches bzw. der Dachhaut oder einen ASD-Rahmen (Topload) aufnehmen können. Auf diesem ASD-Rahmen sitzt nach dem Stand der Technik dann eine Lamelle aus Glas, Polycarbonat (PC), Blech oder Kunststoff.

Bei dem klassischen Fahrzeugrohbaukonzept ist es nicht möglich, ein ASD in Ganzglasoptik von unten einzubauen. Die Oberseite des Schweißflansches der seitlichen Dachholme und der vorderen und hinteren Dachrahmen oder Dachholme müssen eine ebenmäßige Oberfläche bilden, damit auf dieser Fläche die Dachhaut eines normalen Fahrzeuges eingeschweißt bzw. geklebt werden kann. Auf Grund dieser Tatsache müssen alle Blechüberlappungen der Stossstellen des vorderen und hinteren Dachrahmens mit dem seitlichen Dachholm nach unten aufgebaut werden. Auch Blechüberlappungen für Schweißungen von mehrschaligen Dachrahmen und seitlichen Dachholmen müssen deshalb auf der Unterseite des Schweißflansches ausgebildet werden. Somit existiert keine ebenmäßige Fläche für die Abdichtung eines Bottomload-ASDs von unten, da der klassische Rohbau auf die Erfordernisse des Topload-ASDs zugeschnitten ist.

Eine Modularisierung des ASD-Rahmens ist bei diesem Rohbaukonzept, das auf Topload ausgerichtet ist, nicht möglich, da die Rahmenvorderteile und die Rahmenhinterteile immer an die neuen Rohbaukonturen und Designflächen der Dachhaut angepasst werden müssen, da der Aufbau der Rahmen immer von der Dachaußenhaut nach innen in jeweils gleichbleibendem Versatz entsteht (z. B. Glasscheibe 5 mm Dicke, Kleberaupe 5 mm Dicke, Blech 1 mm Dicke). Eine Entkopplung der Designkontur von den Funktionsteilen ist dadurch nicht möglich.

Die Führungsschienen eines bewegbaren Deckels können auf Grund des Wassermanagements nur unter erschwerten Bedingungen konstruktiv ganz nahe an den seitlichen Dachholm verlagert werden. Die Stossstellen zwischen Führungsschiene und Rahmenvorderteil und Rahmenhinterteil müssen sehr aufwendig und kostenintensiv abgedichtet werden.

Bei Dachmodulen mit ASDs in Ganzglasoptik des Standes der Technik, die von oben in das Fahrzeugdach eingebaut werden (Topload), ist somit die Gestaltung des Wassermanagements am Rahmen des Dachmoduls ein wesentlicher Punkt. Üblicherweise wird ein einteiliger Rahmen (Stahl, Kunststoff, LFI usw.) verwendet, der nach außen eine geschlossene Fläche ohne Stossstellen bildet, damit kein Wasser in den Fahrzeuginnenraum gelangen kann. Der Rahmen dient dabei als Halterung aller Anbauteile (Glas, Mechanik, Beschattung, Windabweiser usw.) und zum Teil als aussteifendes Element des Fahrzeugrohbaus.

Auf diesem Rahmen werden auch die Lamellen (aus Glas, PC, LFI, Thermoplast usw.) vor und hinter dem zumindest einen beweglichen Deckel befestigt, die die Lücke zwischen Frontscheibe und Heckscheibe schließen, so dass eine Ganz-glasoptik oder einheitliche Optik erreicht wird.

Bottomload-ASDs werden von unten in einen Ausschnitt der Dachhaut eingeklebt. In der Regel wird dazu ein Verstärkungsrahmen in die Dachhaut eingeschweißt. Hierdurch ist eine Ganzglasoptik "Rail to Rail" (d. h. zwischen den beiden seitlichen Führungsschienen) und von der Frontscheibe zur Heckscheibe nicht möglich, da zwischen Frontscheibe und ASD (bzw. Dachmodul), Heckscheibe und ASD (bzw. Dachmodul) sowie zwischen den seitlichen Dachholmen und dem ASD (bzw. Dachmodul) immer ein Streifen der Dachhaut zu sehen ist.

Ein Nachteil bei Topload-Systemen ist demnach, dass der Rahmen für dieses Dachkonzept auf Grund seiner Abdichtaufgabe sehr groß ist und demzufolge entsprechende Werkzeuge sehr kostenaufwändig sind.

Ein weiterer Nachteil von Topload-Systemen ist, dass das von oben eingebrachte Dachmodul für jedes Fahrzeugmodell eine Neukonstruktion ist, da der Rohbau und die Dachhaut zumeist unterschiedlich sein werden. Der Topload-Rahmen ist von den Designflächen direkt abhängig, da er in jeweils gleichbleibendem Versatz von der Außenhaut her erzeugt wird. Dadurch ist keine Modularisierung des Rahmens möglich.

Eine durchgehende innere Führungsschiene, in der sich ein hinterer Ausstellmechanismus des ASD bewegt, ist bei diesem System auf Grund des Abdichtens des Deckels und des Wassermanagements zwischen Rohbau und Mechanik (Führungsschienen) nur unter erschwerten konstruktiven Bedingungen möglich, da die Mechanik des ASD durch die zwei Dichtebenen zum Fahrzeuginnenraum fahren müsste, wenn der Innenraum nach aussen hin vollständig abgedichtet werden soll. Deshalb sind bei Topload-ASDs üblicherweise zwei Führungsschienen, d. h. eine innere und eine äußere Führungsschiene, erforderlich. Eine "Rail to Rail"-Verglasung ist nur möglich, wenn die innere und die äußere Führungsschiene in einer gemeinsamen Y-Ebene liegen. Dies bedeutet eine freie Übergabe der Außenabstützung in die äußere Führungsschiene über die Dichtungsbereiche (Deckeldichtung und Kleberaupe). Soll diese freie Übergabe vermieden werden, müssen die innere und äußere Führungsschiene in zwei verschiedenen Y-Ebenen liegen, wodurch mehr Bauraum erforderlich ist.

Die beiden Führungsschienen erhöhen jedoch die Kosten der Mechanik im Vergleich mit einem Dachkonzept, das nur eine Führungsschiene benötigt.

Bei klassischen Bottomload-Systemen ist nachteilig, dass stets ein Verstärkungsrahmen benötigt wird, der in den Dachrohbau einzuplanen ist.

Des weiteren kann nur eine solche Glasfläche eingebaut werden, die kürzer ist wie der Abstand zwischen dem vorderen Dachrahmen und dem hinteren Dachrahmen. Es bleibt stets ein Dachhautstreifen vor dem beweglichen Deckel (über dem Windlauf) und ein Dachhautstreifen über dem hinteren Dachrahmen, so dass keine Ganzglasoptik erreicht werden kann. Ferner müssen die Ecken der Deckel abgerundet sein, da das Wassermanagement nichts anderes zu lässt (XY-Abdichtung und Ableitung des gesamten Wassers in die Führungsschienen und das Rahmenvorderteil).

Der Erfindung liegt die Aufgabe zugrunde, ein eingangs genanntes Fahrzeugdach zu schaffen, das die oben genannten Nachteile vermeidet und im Hinblick auf eine vereinfachte Anbringung des Dachmoduls von unten (bottomload) verbessert ist.

Die Aufgabe wird bei einem eingangs genannten Fahrzeugdach erfindungsgemäß dadurch gelöst, dass das Dachmodul zumindest zwei Führungsschienen und ein die Führungsschienen verbindendes Verbindungselement aufweist und dass zumindest die Führungsschienen an der Unterseite eines Flansches des Dachrahmens befestigt sind.

Vorteilhafte Ausgestaltungen der Erfindung sind in den Unteransprüchen angegeben.

Das Dachmodul ist somit modular aufgebaut und kann durch Auswahl und Anpassung der oben genannten Bauteile an unterschiedliche Einbausituationen leicht angepasst werden. Da ein Zwischenträger, wie er aus dem Stand der Technik bekannt ist, bei dem erfindungsgemäßen Fahrzeugdach nicht verwendet wird, können die insbesondere in Fahrzeuglängsrichtung verlaufenden Führungsschienen von der Dachöffnung weg und nach außen an den Dachrahmen hin angeordnet werden, so dass bei einem Dachmodul mit transparenter Abdeckung der Durchsichtsbereich eine gegenüber den bekannten Lösungen größere Breite aufweisen kann. Insbesondere kann bei dem erfindungsgemäßen Fahrzeugdach eine Ganzglasoptik bereitgestellt werden, wenn das Dachmodul Glasdeckel und Glaslamellen bzw. solche Bauteile aus transparentem Kunststoff in Glasoptik aufweist, die sich kontinuierlich an die Frontscheibe und die Heckscheibe anpassen und zwischen die seitlichen Dachrahmen des Fahrzeugdaches eingepasst sind.

In einer bevorzugten Gestaltung weist der Flansch eine nach innen gerichtete Flanschverlängerung auf, die einlagig gebildet ist. Die Flanschverlängerung erstreckt sich somit vom Dachrahmen bzw. dem Flansch in Richtung zur Dachöffnung, wobei die Breite der Flanschverlängerung (d. h. in Richtung zur Dachöffnung) abhängig von den Erfordernissen bzw. der Größe des jeweiligen Fahrzeugdaches, des Dachmoduls und der Abmessungen des Dachrahmens ist.

Die Flanschverlängerung ist bevorzugt eines von zwei oder mehreren schalenartigen Profilteilen, aus denen der holmartige Dachrahmen gebildet ist. Dieses Profilteil stellt die einlagige Gestaltung dar. Zur Anpassung an die jeweilige Dachsituation wird dieses Profilteil bei der Herstellung des Dachrohbaus bzw. des Dachrahmens entsprechend den Erfordernissen gestaltet und mit dem Dachrahmen zu einer Einheit verbunden. Die Flanschverlängerung kann auch eine Verstärkung aufweisen, die z. B. bereichsweise von einer zweiten Lage oder auch von Sicken oder Prägungen gebildet ist.

Zweckmäßigerweise ist die die Flanschverlängerung am Dachrahmen umlaufend gebildet, so dass sie eine durchgehende Befestigungsfläche für ein Dachmodul bildet. Jedoch könnte die Flanschverlängerung auch nur an bestimmten Dachrahmenteilen wie den beiden seitlichen Dachrahmen vorgesehen sein.

Vorzugsweise ist eine Dichtung auf der Oberseite des Flansches oder der Flanschverlängerung angebracht. Des weiteren kann eine umlaufende Dichtung an der Flanschverlängerung befestigt sein und insbesondere auf den Rand der Flanschverlängerung aufgesteckt sein. Die Dichtung dichtet den Flansch bzw. die Flanschverlängerung zu einer oberseitigen Abdeckung hin ab und bildet damit einen äußeren Wasserkanal am Flansch, in dem Wasser nach vorne und/oder nach hinten abgeleitet werden kann.

Die Aufgabe wird auch durch ein Fahrzeugdach mit den Merkmalen des Anspruchs 10 gelöst. Danach ist vorgesehen, dass die Flanschverlängerung insbesondere am vorderen Dachquerrahmen und/oder am hinteren Dachquerrahmen als eine vergrößerte Abstützbasis für eine darauf festlegbare Lamelle der Dachaußenhaut gebildet ist. Während an dem seitlichen Dachrahmen eine schmale Flanschverlängerung zur Befestigung der Führungsschiene und dem Anbringen einer Dichtung ausreichend und so schmal auch erwünscht sein kann, kann an den Dachquerrahmen eine in Fahrzeuglängsrichtung wesentlich verbreiterte Flanschverlängerung eine verbesserte Lagerung der daran festlegbaren bzw. festklebbaren Lamelle bieten.

Bei dem erfindungsgemäßen Fahrzeugdach ist somit vorteilhaft, dass der seitliche Dachholm und die vorderen und hinteren Dachrahmen eine Fläche an der Innenseite des Fahrzeugdaches bzw. Dachrahmens bereitstellen, an dem ein Dichtsystem angebracht werden kann. Dazu wird bevorzugt die Unterschale bei einem zweischaligen Dachrahmen-Rohbau bzw. die Mittelschale bei einem dreiteiligen Dachrahmen-Rohbau weiter nach innen zur Dachöffnung hin verlängert. Durch diese Gestaltung entsteht eine ebenmäßige Fläche am Dachrohbau, die nur in den Eckbereichen zu einer kurzen Überlappung der Bleche der vorderen und hinteren Dachrahmen mit den seitlichen Dachholmen führt. Somit kann ein geeignetes Dichtsystem am Rohbau bzw. am ASD angebracht werden, was einen Großteil des eindringenden Wassers über die Fahrzeugaußenhaut ableitet.

Der Anteil des Wassers, der über die Mechanikdichtebene eintritt, wird in die Führungsschiene abgeleitet und über ein Wasserablaufrohr durch den Fahrzeuginnenraum abgeleitet. Der Flansch am Dachrahmen kann an seinem freien Rand gerade begrenzt sein und nicht der Designkontur folgen, wodurch das Anbringen des Dichtsystems bzw. der Dichtung erleichtert wird, oder in einer geeigneten Kurvenbahn begrenzt sein, wobei in diesem Fall ein aufwendigeres Dichtsystem notwendig ist.

Durch dieses Vorgehen kann auch die Mechanikhauptebene (innere Führungsschiene) bis an den Rohbau nach außen verlagert werden und der Durchsichtsbereich in Dachquerrichtung (Y-Richtung) deutlich erweitert werden.

Der Rohbau stellt die Flächen für die Befestigung einer Lamelle aus Glas, PC, Blech oder Kunststoff im vorderen Beriech wie auch im hinteren Bereich bereit. Wahlweise kann auch die Frontscheibe und die Heckscheibe bis an die Schnittstelle zum ASD verlängert sein. Durch diese Maßnahme kann das Rahmenvorderteil und das Rahmenhinterteil von der Designfläche entkoppelt werden und es können Durchbrüche für Befestigungselemente für Motoren, Führungselemente und dergleichen integriert werden. Gleichzeitig können diese Elemente unter dem vorderen Dachrahmen bzw. den hinteren Dachrahmen angeordnet werden, wodurch der Durchsichtsbereich in X-Richtung erweitert wird.

Die Stossstellen an den Führungsschienen spielen bei dem Einbau von unten keine Rolle, da hier das Wasser direkt wie bei einem Bottomload-System im Bereich der Führungsschienen eingeleitet wird, die einfach abzudichten sind. Die Stossstellen an den Einbauflanschen kommen bei diesem Wassermanagement nicht zum Tragen. Somit kann der Rahmen modular und damit kostengünstig aufgebaut werden.

Der erfindungsgemäße Dachrohbau stellt für die Befestigung einer Frontlamelle bzw. einer Hecklamelle (aus Glas, PC, Blech, LFI usw.) bzw. für das oberseitige Verlängern der Frontscheibe bzw. der Heckscheibe geeignete Klebeflächen bereit und verstärkt dadurch zusätzlich den Dachrohbau, insbesondere bei einer größeren Befestigungsbasis in Längsrichtung (X-Richtung).

Ein Vorteil dieser Gestaltung ist somit ein optimiertes Wassermanagement auch bei Bottomload-ASD-Systemen, da eine ebenmässige Anlagefläche auf der Schweißflanschunterseite des Rohbaus bereitgestellt ist. Dieses Wassermanagement ist unproblematisch, da - wie bei Bottomload-Systemen üblich - Stossstellen zwischen Rahmenteilen und Führungsschienen in einfacher Weise geeignet gestaltet werden können.

Durch die Funktionsintegration in die Dachrahmenteile sind weniger Bauteile erforderlich, da die Rahmenteile nicht mehr als Dichtfläche dienen und unter den Rohbau verlagert werden können. Somit werden Kosten durch geringere Werkzeugkosten für die Rahmenteile und durch eine Modularisierung der Rahmenbauteile gesenkt.

Das Dachmodul weist somit zwei Schienen und mindestens ein Verbindungselement der Schienen vorne und/oder hinten auf. Es können weitere Elemente eingebracht werden, die den Rahmen z.B. in der Mitte verbinden, um weitere Funktionen wie z.B. Lagerung eines Sonnenrollos, Steifigkeitserhöhung usw. zu gewähneisten.

Das Wassermanagement wird so gestaltet, dass ein Großteil des Wassers über den Fahrzeugrohbau entwässert wird und nur der Teil, der über die Mechanikdichtungen in das Dach gelangt, wird über Abläufe aus den Führungsschienen entwässert. Entscheidend für diese Lösung ist eine Anpassung des Fahrzeugrohbaus und eine entsprechendes Dichtsystem.

Die Führungsschienen werden direkt an den Dachrohbau (Dachrahmen) oder mit geeigneten Adaptionselementen befestigt (Rail to Rail).

Das Dachmodul wird von unten eingebaut (bottomload). Dadurch können die Rahmenvorderteile bzw. Rahmenhinterteile unter die Dachrahmenvorder- und hinterteile verlagert werden, wodurch die Durchsichtsfläche in X-Richtung vergrößert wird und zur Entkopplung der Funktionsflächen von den Designflächen führt. Durch die Entkopplung können in den Rahmenvorderteilen und den Rahmenhinterteilen Durchbrüche erstellt werden, die eine Funktionsintegration von weiteren Elementen ermöglicht.

Das Dachmodul kann modularer gestaltet werden als bei einem Topload-ASD, da der Rahmen des Dachmoduls (Führungsschienen und dergleichen) aus mehreren Einzelteilen besteht, die gegebenenfalls bei anderen Fahrzeugmodellen bzw. Einsatzfällen wieder verwendet werden können.

Durch die beschriebene Einbausituation des ASDs, durch das neue Wassermanagement sowie durch die Anordnung der Führungsschienen wird eine Ganzglasoptik bei einem Bottomload-ASD erreicht, das der eines Topload-ASDs entspricht.

Als Vorteil ergibt sich somit eine Kostensenkung durch modularen Aufbau des Rahmens des Dachmoduls ähnlich einem Schiebe-Hebe-Dach (SHD)-Bottomload und die Möglichkeit einer "Rail to Rail"- Verglasung für einen größeren Durchsichtsbereich in Y-Richtung.

Nachfolgend wird ein erfindungsgemäßes Fahrzeugdach anhand von Ausführungsbeispielen unter Bezugnahme auf die Zeichnung näher erläutert. Es zeigt:
- Fig. 1: in einer isometrischen Draufsicht ein Fahrzeugdach eines Personenkraftwagens;
- Fig. 2: in einer isometrischen Draufsicht mehrere Bauteile einer Dachstruktur des Fahrzeugdaches;
- Fig. 3: in einer Querschnittansicht einen Dachseitenholm der Dachstruktur mit daran angeordneten Bauteilen;
- Fig. 4: in einer Querschnittansicht ein weiteres Ausführungsbeispiel eines Dachseitenholms der Dachstruktur mit daran angeordneten Bauteilen;
- Fig. 5: in einer isometrischen Draufsicht die linke vordere Verbindungsstelle des vorderen Dachquerholms mit dem linken Dachseitenholm;
- Fig. 6: in einer isometrischen Draufsicht die Unterseite der in Fig. 6 dargestellten Verbindungsstelle des vorderen Dachquerholms mit dem linken Dachseitenholm;
- Fig. 7: in einer Längsschnittansicht einen vorderen Dachquerholm der Dachstruktur mit einer daran befestigten Glaslamelle; und
- Fig. 8: in einer Längsschnittansicht den vorderen Dachquerholm gemäß Fig. 4 in einer abgewandelten Ausführungsform mit einer Antriebseinrichtung eines ASD-Systems.

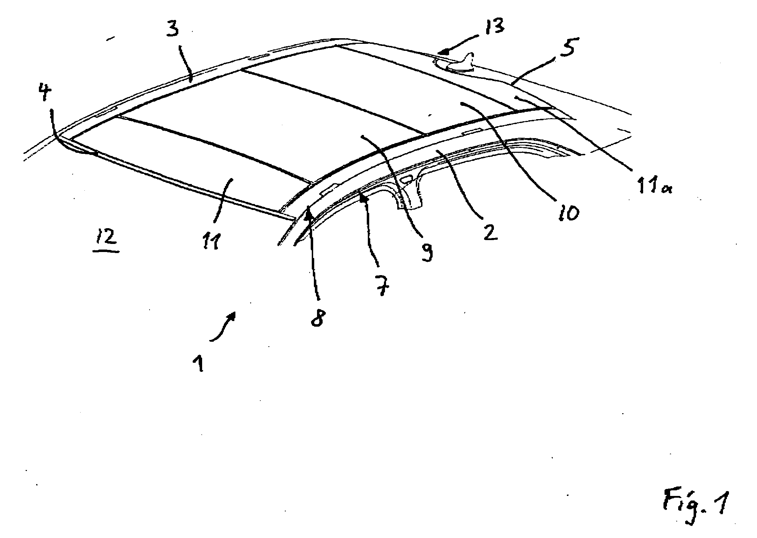

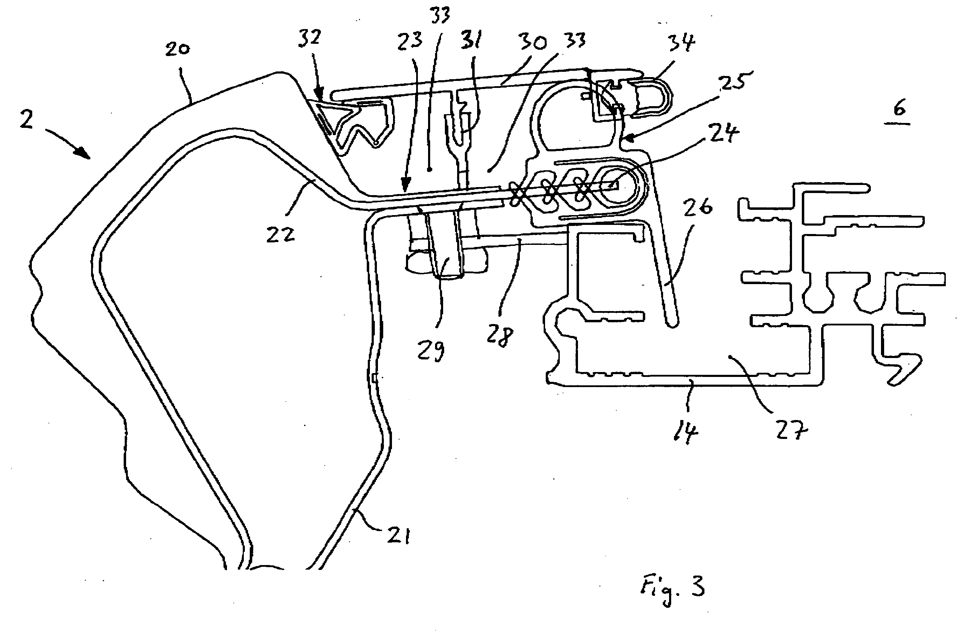

Ein Fahrzeug weist ein Fahrzeugdach 1 (siehe Fig. 1) mit einer Dachstruktur auf, die einen linken und einen rechten Dachseitenholm 2 bzw. 3 sowie einen vorderen Dachquerholm (Windlauf) 4 und einen hinteren Dachquerholm 5 aufweist, wobei diese Holme einen eine Dachöffnung 6 (siehe Fig. 3) umgebenden umlaufenden Dachrahmen 7 bilden. An den Holmen 2 bis 5 bzw. dem Dachrahmen 7 ist ein Dachmodul 8 befestigt, das ein außengeführtes Schiebedach 9 (ASD, grundsätzlich z. B. aus der DE 197 13 347 A1 bekannt) und einen dahinter angeordneten festen Deckel 10 aufweist. Das Dachmodul 8 ist von unten am Dachrahmen 7 befestigt (bottom load) und eine vordere Glaslamelle 11 sowie eine hintere Glaslamelle 11a sind von oben am Dachrahmen 7 befestigt. Wenn auch das Schiebedach 9 und der Deckel 10 aus Glas sind oder glasähnlich gebildet sind, so bietet das Fahrzeugdach eine Ganzglasoptik zwischen der Frontscheibe 12 und der Heckscheibe 13. Statt aus Glas können die Bauteile auch aus einem transparenten Kunststoff gefertigt sein. Andererseits sind nichttransparente Ausführungsformen nicht generell ausgeschlossen.

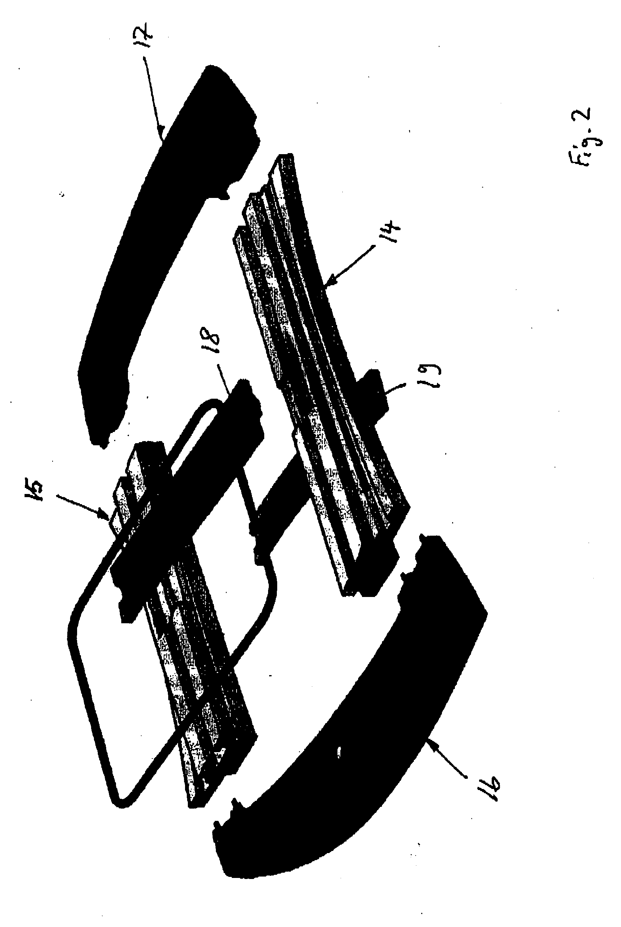

Fig. 2 zeigt in schematischer Einzelteildarstellung Bauteile eines modular aufgebauten Dachmoduls 8. Eine linke und eine rechte Führungsschiene 14 bzw. 15 werden über ein vorderes Rahmenteil 16 und ein hinteres Rahmenteil 17 miteinander verbunden. Zusätzlich können mehrere Querverbindungsteile wie ein oberes Verbindungselement 18 und ein unteres Verbindungselement 19 die beiden Führungsschienen 14, 15 miteinander fest verbinden, dieser Struktur eine hohe Festigkeit verleihen und weitere Komponenten wie z. B. einen Sonnenrollo lagern.

Jeder Dachholm 2 bis 5 ist aus zwei miteinander verbundenen schalenartigen Profilteilen oder Profilblechen, z. B. einem äußeren Profilteil 20 und einem inneren Profilteil 21, aufgebaut und enthält in diesem Beispiel eines dreiteilig aufgebauten Dachrahmens zusätzlich ein weiteres Verstärkungsprofilteil 22, das zwischen diesen beiden Profilteilen 20 und 21 angeordnet ist und gemeinsam mit diesen einen einwärts zur Dachöffnung 6 hin gerichteten Flansch 23 bildet, an dem die beiden Profilteile 20 und 21 und das Verstärkungsprofilteil 22 miteinander fest verbunden sind. Das Verstärkungsprofilteil 22 erstreckt sich über den Flansch 23 einwärts hinaus und bildet eine Flanschverlängerung 24, auf die eine Dichtung 25 aufgesteckt ist. Die Dichtung 25 enthält eine Abtropflippe 26, so dass eingedrungenes Wasser in den von der Führungsschiene 14 gebildeten Wasserkanal 27 geführt und hieraus über eine Ableitung wie z. B. einen Schlauch nach außen abgeführt wird.

Die Führungsschiene 14 ist über einen Haltesteg 28 und über am Flansch 23 voneinander beabstandet angeordnete Bolzen 29 (nur ein Bolzen in der Zeichnungsebene ist dargestellt) unmittelbar gegen die Unterseite des Flansches 23 verschraubt und kann, da ein zwischenliegender Trägerrahmen weder vorgesehen noch erforderlich ist, sehr weit nach außen gegen den Dachholm 2 positioniert werden, wodurch ein Durchsichtsbereich der Dachöffnung in Querrichtung des Fahrzeugdaches vergrößert wird.

Eine Abdeckleiste 30 ist mittels einer Clipverbindung 31 am Flansch 23 derart befestigt, dass sie innenseitig auf der Dichtung 25 dicht aufliegt und außenseitig über eine Randdichtung 32 gegenüber dem Dachrahmen 2 abgedichtet ist. Der zwischen dem Flansch 23 und der Abdeckleiste 30 vorgesehene und von der Dichtung 25 einwärts begrenzte Kanal 33 führt eingedrungenes Wasser nach vorne zur Frontscheibe 12 oder nach hinten zur Heckscheibe 13 ab. Eine an der Abdeckleiste 30 angebrachte Dichtung 34 dichtet den geschlossenen Deckel 9 ab.

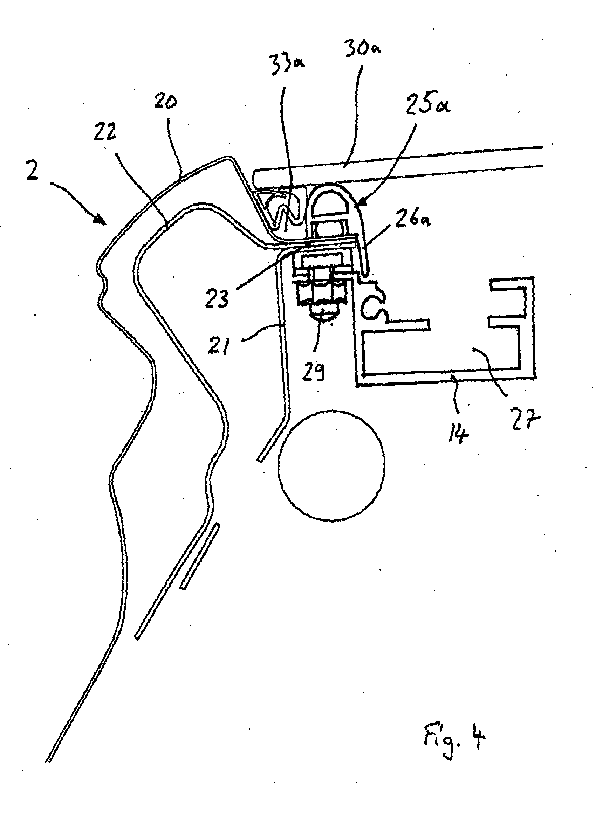

Eine in Fig. 4 dargestellte Abwandlung zeigt einen Dachrahmen 7 bzw. einen linken Dachseitenholm 2, an dem der Flansch 23 in einer übereinstimmenden Breite der beiden Profilteile 20 und 21 sowie des Verstärkungsprofilteils 22 gebildet ist, d. h. ohne Überstand des Verstärkungsprofilteils 22. Die Dichtung 25a ist auf der Oberseite des Flansches 23 befestigt. Die Führungsschiene 14 ist gleichfalls an der Unterseite des Flansches 23 mittels des Bolzens 29 verschraubt und kann aufgrund der geringen Breite des Flansches 23 (ohne eine Flanschverlängerung 24) sehr nahe an dem Dachrahmen 7 bzw. dem Dachseitenholm 2 positioniert werden.

Der Kanal 33a unterhalb der Abdeckleiste 30a ist hier schmäler, aber zum Abführen von Wasser ausreichend dimensioniert.

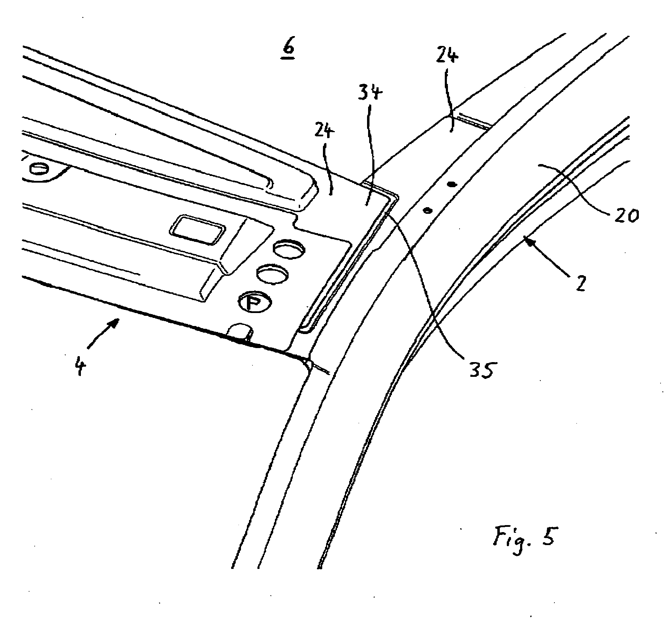

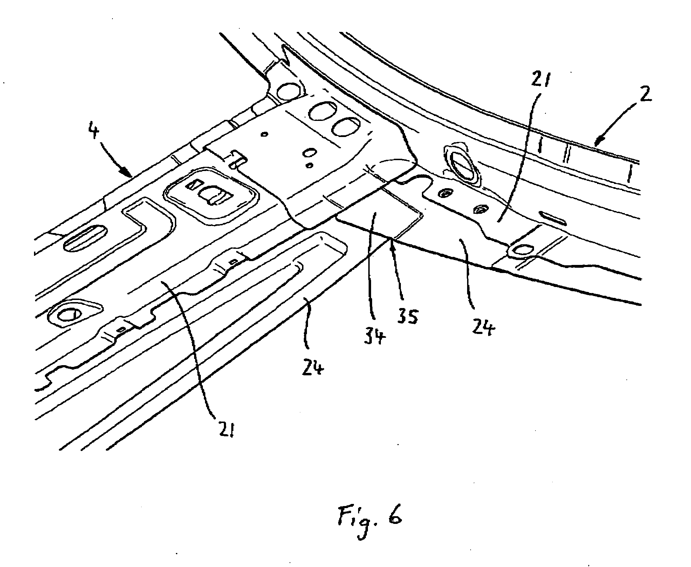

Am Übergang vom linken Dachseitenholm 2 zum vorderen Dachquerholm 4 (Windlauf) sind gemäß der in den Fig. 5 und 6 dargestellten Ausführungsform die beiden Flanschverlängerungen 24 in einem Überlappungsbereich 34 übereinander gelegt und miteinander fest verbunden, wobei mittels einer an der Flanschverlängerungen 24 des Dachseitenholms 2 eingeprägten Vertiefung 35 ein möglichst ebenflächiger Übergang zwischen den beiden Flanschverlängerungen 24 geschaffen wird. Damit sind die Flanschverlängerungen 24 umlaufend durchgehend gebildet und die Dichtung 25, die bevorzugt als geschlossenes am Dachrahmen 7 umlaufendes Profilteil gebildet ist, wird auf die einwärts zur Dachöffnung 6 vorstehenden Flanschverlängerungen 24 aufgesteckt, so dass eine ununterbrochene Abdichtung an der Flanschverlängerung 24 bzw. dem Dachrahmen 7 erreicht wird.

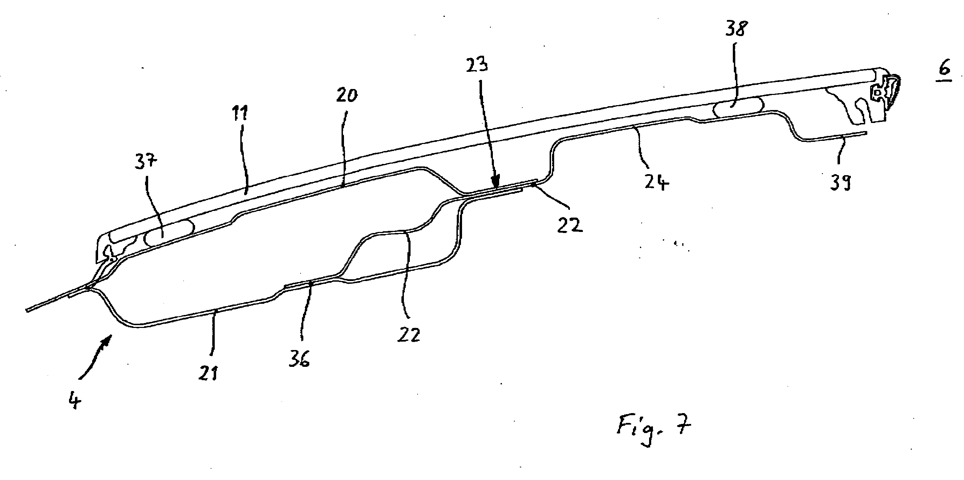

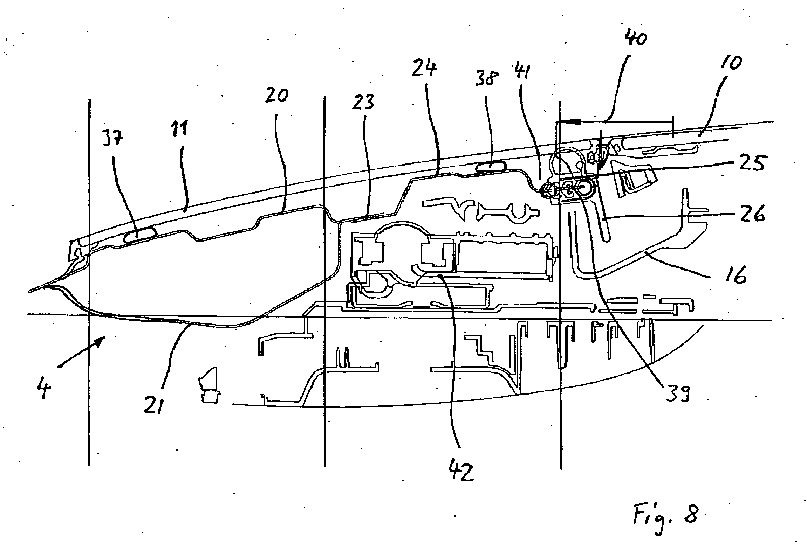

Fig. 7 und 8 zeigen jeweils einen Schnitt durch den vorderen Dachquerholm 4 in einer vertikalen Längsmittelebene des Fahrzeugdaches. Das äußere Profilteil 20 und das innere Profilteil 21 bilden ein geschlossenes stabiles Hohlprofil und zusammen mit dem dazwischen angeordneten Verstärkungsprofilteil 22 den Flansch 23. Das Verstärkungsprofilteil 22 ist vorderendig mit dem inneren Profilteil 21 an einer Verbindungsstelle 36 fest verbunden, z. B. verklebt oder verschweißt, und andererseits als profilierte Flanschverlängerung 24 vergleichsweise weit in Richtung zur Dachöffnung 6 hinter der vorderen Glaslamelle 11 verlängert. In der Mitte des vorderen Dachquerholms 4 weist die Flanschverlängerung 24 etwa die Breite des geschlossenen Profils des Dachquerholms 4 auf (Breite in Längsrichtung des Fahrzeugdaches), während die Breite der Flanschverlängerung 24 zu den Enden hin abnehmen kann (wie auch aus Fig. 5 zu entnehmen ist).

Die vordere Glaslamelle 11 ist beispielsweise mittels einer vorderen Kleberaupe 37 und einer hinteren Kleberaupe 38 an dem äußeren Profilteil 20 bzw. der Flanschverlängerung 24 verklebt. Da die hintere Kleberaupe 38 insbesondere im Mittelabschnitt des Dachquerholms 4 einen großen Abstand von der vorderen Kleberaupe 37 aufweist, erhält die Glaslamelle 11 eine große Abstützbasis für eine feste und dauerhafte Verbindung bzw. Verklebung.

Auf den der Dachöffnung 6 benachbarten Endabschnitt 39 der Flanschverlängerung 24 ist die Dichtung 25 aufgesteckt. Der Deckel 10 kann auch derart angeordnet sein, dass sein Vorderrand bis über die Dichtung 25 reicht (durch den Pfeil 40 dargestellt). In den Kanal 41 eindringendes Wasser kann dann seitlich der Frontscheibe 12 ablaufen.

Das vordere Rahmenteil 16 untergreift die Abtropflippe 26 und führt Wasser ebenfalls seitlich ab. Ein Antriebsmotor 42 für das Schiebedach 9 (ASD) ist am vorderen Rahmenteil 16 gelagert und wird beim bottomload-Einbau des Dachmoduls in seine Einbaulage unter dem Flansch 23 bzw. der Flanschverlängerung 24 positioniert.

Der hintere Dachquerholm 5 kann vergleichbar dem in den Fig. 6 und 7 dargestellten vorderen Dachquerholm 4 gebildet sein und die hintere Glaslamelle 11a über Verklebungen wie z. B. Kleberaupen in der in Fig. 6 und 7 gezeigten Art und Anordnung halten.

### Bezugszeichenliste

- 1: Fahrzeugdach
- 2: linker Dachseitenholm
- 3: rechter Dachseitenholm
- 4: vorderer Dachquerholm
- 5: hinterer Dachquerholm
- 6: Dachöffnung
- 7: Dachrahmen
- 8: Dachmodul
- 9: Schiebedach
- 10: Deckel
- 11: vordere Glaslamelle
- 11 a: hintere Glaslamelle
- 12: Frontscheibe
- 13: Heckscheibe
- 14: linke Führungsschiene
- 15: rechte Führungsschiene
- 16: vorderes Rahmenteil
- 17: hinteres Rahmenteil
- 18: oberes Verbindungselement
- 19: unteres Verbindungselement
- 20: äußeres Profilteil
- 21: inneres Profilteil
- 22: Verstärkungsprofilteil
- 23: Flansch
- 24: Flanschverlängerung
- 25: Dichtung
- 25a: Dichtung
- 26: Abtropflippe
- 27: Wasserkanal
- 28: Haltesteg
- 29: Bolzen
- 30: Abdeckleiste
- 31: Clipverbindung
- 32: Randdichtung
- 33: Kanal
- 33a: Kanal
- 34: Überlappungsbereich
- 35: Vertiefung
- 36: Verbindungsstelle
- 37: vordere Kleberaupe
- 38: hintere Kleberaupe
- 39: Endabschnitt
- 40: Pfeil
- 41: Kanal
- 42: Antriebsmotor

## Patentansprüche

1. Fahrzeugdach mit einem eine Dachöffnung umgebenden Dachrahmen und einem die Dachöffnung abdeckenden Dachmodul, das Führungsschienen und ein an den Führungsschienen bewegbar gelagertes Abdeckelement aufweist,
**dadurch gekennzeichnet,**
**dass** das Dachmodul (8) zumindest zwei Führungsschienen (14, 15) und ein die Führungsschienen (14, 15) verbindendes Verbindungselement (16, 17) aufweist und
**dass** zumindest die Führungsschienen (14, 15) an der Unterseite eines Flansches (23) des Dachrahmens (2, 7) befestigt sind.

2. Fahrzeugdach nach Anspruch 1,
**dadurch gekennzeichnet, dass** der Flansch (23) eine nach innen gerichtete Flanschverlängerung (24) aufweist, die einlagig gebildet ist.

3. Fahrzeugdach nach Anspruch 1 oder 2,
**dadurch gekennzeichnet, dass** die Flanschverlängerung (24) am Dachrahmen (2, 7) umlaufend gebildet ist.

4. Fahrzeugdach nach einem der Ansprüche 1 bis 3,
**dadurch gekennzeichnet, dass** eine Dichtung (25a) auf der Oberseite des Flansches (23) angebracht ist.

5. Fahrzeugdach nach einem der Ansprüche 2 bis 4,
**dadurch gekennzeichnet, dass** eine umlaufende Dichtung (25) an der Flanschverlängerung (24) befestigt und insbesondere auf den Rand der Flanschverlängerung (24) aufgesteckt ist.

6. Fahrzeugdach nach Anspruch 4 oder 5,
**dadurch gekennzeichnet, dass** die Dichtung (25, 25a) zu einer oberseitigen Abdeckung (30, 30a) hin abdichtet.

7. Fahrzeugdach nach einem der Ansprüche 4 bis 6,
**dadurch gekennzeichnet, dass** die Dichtung (25, 25a) eine in die Führungsschiene (14) gerichtete Abtropflippe (26, 26a) aufweist.

8. Fahrzeugdach nach einem der Ansprüche 1 bis 7,
**dadurch gekennzeichnet, dass** das Dachmodul (8) als Verbindungselement ein vorderes Rahmenteil (16) und/oder ein hinteres Rahmenteil (17) aufweist.

9. Fahrzeugdach nach einem der Ansprüche 1 bis 8,
**dadurch gekennzeichnet, dass** die Flanschverlängerung (24) insbesondere am vorderen Dachquerholm (4) und/oder am hinteren Dachquerholm (5) entfernt vom Flansch (23) eine vergrößerte Abstützbasis für eine darauf festlegbar Lamelle (11, 11a) der Dachaußenhaut bildet.

10. Fahrzeugdach mit einem eine Dachöffnung umgebenden Dachrahmen, einem die Dachöffnung abdeckenden Dachmodul und einem am Dachrahmen gebildeten und zur Dachöffnung gerichteten Flansch zum Festlegen des Dachmoduls, insbesondere nach einem der Ansprüche 1 bis 9,
**dadurch gekennzeichnet,**
**dass** eine Flanschverlängerung (24) insbesondere am vorderen Dachquerholm (4) und/oder am hinteren Dachquerholm (5) entfernt vom Flansch (23) eine vergrößerte Abstützbasis für eine darauf festlegbar Lamelle (11, 11a) der Dachaußenhaut bildet.

11. Fahrzeugdach nach einem der Ansprüche 1 bis 10,
**dadurch gekennzeichnet, dass** Abdeckelemente (9, 10) des Dachmoduls (8) mit einer vorderen und/oder einer hinteren Glaslamelle (11, 11a), die an eine Frontscheibe (12) bzw. eine Heckscheibe (13) anschließen, ein Fahrzeugdach mit Ganzglasoptik bilden.
